# EUROPEAN PATENT SPECIFICATION

(11) **EP 1 051 237 B1**
(45) Date of publication and mention of the grant of the patent: **12.11.2003**
(21) Application number: 98942871.9
(22) Date of filing: 09.09.1998
(51) Int. Cl.: B01F 17/00, C11D 1/66, E21B 37/06, E21B 43/27, C04B 28/02, C04B 24/10, C04B 24/38

(54) **USE OF SURFACTANT COMPOSITIONS FOR WELLBORE OPERATIONS**
VERWENDUNG VON OBERFLÄCHENAKTIVEN SUBSTANZEN FÜR BOHROPERATIONEN
UTILISATION DE COMPOSITIONS TENSIOACTIVES POUR OPERATIONS DANS DES PUITS DE FORAGE

(30) Priority: 09.12.1997 US 987726; 09.12.1997 US 987844
(43) Date of publication of application: 15.11.2000
(73) Proprietor: ConocoPhillips Company, Bartlesville, OK 74004 (US)
(72) Inventor: CHAN, Albert, F., Plano, TX 75075 (US); LY, Kieu, T., Richardson, TX 75081 (US)
(74) Representative: Ricker, Mathias, Dr. Dipl.-Chem.
(86) International application number: GB9802730
(87) International publication number: WO99029408

(56) References cited:
- WO-A-86/06404
- US-A- 5 221 343
- US-A- 5 374 361
- US-A- 5 663 137

## Description

The present invention pertains to the use of surfactant compositions comprising alkyl polyglycoside surfactants, or combinations of alkyl polyglycosides and linear ethoxylated alcohol surfactants which form Winsor Type III microemulsions, in selected oil/water systems in wellbore operations.

### Background

The failure to perform an effective cleanout operation during drilling or workover of an oil or gas well, or an acidizing treatment of a formation interval, or to establish a bond between a cement composition and a wellbore wall or a casing or tubing can cause undesirable results in oil and gas well operations. For example, failure to perform an effective cleanout operation during drilling or workover of an oil well can result in contamination and plugging of an earth formation from which fluids are desired to be produced. Moreover, during an acidizing treatment of an earth formation to make the formation more productive, if oil based contaminants in the formation interval adjacent to a wellbore are not removed therefrom, the effectiveness of the acidizing treatment can be substantially reduced. Still further, ineffective cleaning of a wellbore wall, including a casing, liner or tubing string, can result in a poor cement bond during cementing operations thereby allowing an undesirable flow of fluids along the wellbore or a failure to stabilize the casing in the wellbore. The cost of remedial action for any of the above-mentioned failures can be substantial in both onshore and offshore well operations. Moreover, contamination of a formation interval with unwanted oil based materials can be ruinous.

U.S. Patent 5,374,361, issued December 20, 1994 to Albert F. Chan, is directed to providing an improved method of removing oil based material from a wellbore using a washing composition containing an alkyl polyglycoside surfactant which comprises 1.0% to 10.0% by weight of the composition and with a cosurfactant selected from a group consisting of linear alkyl ethoxylate and alkyl phenol ethoxylate. Still further, U.S. Patent 5,458,197, issued October 17, 1995 to Albert F. Chan is directed to improved cleanout systems for wellbores using alkyl polyglycoside surfactants. Both these patents are hereby incorporated in their entirety by reference. Notwithstanding the improvements in well cleanout operations described and claimed in these patents, there has been a need to provide a cleanout composition which has suitable characteristics for solubilizing substantially all of the oil based materials expected to come into contact with the composition. Moreover, this solubilization characteristic should be substantial while providing a range of a hydrophilic-lipophilic balance of the composition as broad as possible, since, for example, the salinity of fluids present in a well and an adjacent earth formation may vary considerably. Accordingly, the range of the microemulsion formed by the surfactant solution, as a function of the hydrophilelipophile balance (HLB) number is desired to be made as broad as possible.

US 5 221 343 discloses the incorporation into a cement composition of an organic polyglycoside as a dispersant, setting retarder or an air entaining agent or a combination of these. WO 86/06417 discloses a method for inhibiting oxidation or acid attack of a ferrous metal using a solution which may contain polyglycosides.

Alkyl polyglycoside surfactants in electrolyte solutions having a pH of about 4.0 or less have good wettability, suspension of contaminant particles and solubilization of oily coatings on surfaces. The acidic nature of cleaning solutions of this type is such as to also show a distinct capability of dissolving carbonate and calcite scales and iron oxide. Solutions of alkyl polyglycoside surfactants, in combination with caustic materials such as sodium hydroxide and potassium hydroxide, are also particularly effective in removing oil based drilling fluids, pipe thread sealant and lubricant materials and other oil based contaminants found in wellbores, including diesel oil, mineral oil, synthetic oils and crude oil as well as other naturally occurring hydrocarbon substances. Alkyl polyglycoside surfactants remain very surface active at relatively high pH and therefore can be used effectively as wetting, dispersing and/or emulsifying agents in a caustic environment, such as encountered in cement slurries, for example. Moreover, alkyl polyglycoside surfactants remain active at relatively high temperatures, up to about 177°C (350°F) example, because alkyl polyglycoside molecules have a superior hydrogen bonding capability as compared with other typical nonionic surfactants such as ethoxylated alcohols.

The oil soluble portion of alkyl polyglycoside surfactants may be controlled by the alkyl chain length which can be varied from about C4 to about C20. Each saccharide group is believed to be equivalent to five to seven ethylene oxide groups in ethoxylated alcohol surfactants and is therefore very effective in rendering water soluble properties to alkyl polyglycoside surfactants even at high temperatures and the high salinity and hardness conditions found in sea water and subsurface brines, for example. Moreover, since oil, brine and the above-mentioned contaminants are usually present in an oil well, for example, it is desirable to provide an alkyl polyglycoside composition for well cleanout and formation interval decontamination, which exhibits very low interfacial tension and forms a Winsor Type III microemulsion over the broad temperature ranges typically encountered in both shallow and deep oil and gas wells.

Still further, since the temperature or the salinity of fluids present in a well may vary considerably, the range of the microemulsion formed by a surfactant composition, as a function of the HLB number is, as mentioned previously, desired to be made as broad as possible. Additionally, the breadth of the middle-phase or Winsor Type III microemulsion, as a function of the HLB number is also desired to be made as broad as possible.

Although alkyl polyglycoside surfactants have become popular in various detergent compositions, primarily directed to institutional and household cleaning products which are not exposed to the extremes encountered in wellbore cleanout processes, these products have been developed with relatively short alkyl chain length surfactants from C4 to C10 which do not provide sufficient emulsifying properties to emulsify oils frequently found in wellbores. On the other hand, relatively long alkyl chain length surfactants such as C16 to C18 which do not provide sufficient wetting properties have been used in emulsified cosmetic cleansing products. Further the longer alkyl chain length alkyl polyglycosides especially the polyglycosides containing an even number of carbon atoms are surfactants which are too viscous for convenient mixing to provide surfactants to meet varied wellbore conditions. The compositions with the shorter alkyl chain lengths act as good hydrotropes or wetting agents and the compositions with the longer alkyl chain lengths have good emulsifying properties, but none of these commercially available compositions, used alone, are deemed optimal for conditions wherein a relatively broad range of salinity of wellbore fluids and a relatively broad operating temperature range are encountered. Accordingly, there has been a pressing need to develop improvements in alkyl polyglycoside surfactant compositions used generally in the methods and systems described in earlier patents as well as in other well operations and related activities wherein oil based contaminants commonly found in wells are present and are desirably removed.

### SUMMARY OF THE INVENTION

The present invention provides a use of surfactant composition as defined in claim 1 in oil, well operations, including the use for wellbore cleanout, cementing, and formation interval acidizing, in connection with the production of oil and gas from such wells. The surfactant composition is particularly adapted for removal of oil based drilling fluids, pipe thread sealant and lubricant materials, crude oil and other organic or oil based materials present in wellbores and near formation intervals during drilling and completion processes.

In accordance with the invention, the well treatment compositions to be used are based on blends of alkyl polyglycoside surfactants which produce an improved interfacial tension characteristic, or solubilization properties, coupled with the ability to form a Winsor Type III microemulsion over a broad range of temperatures and salinity conditions found in wellbore fluids and in conjunction with wellbore operations.

In accordance with the invention, the surfactant compositions to be used provide a Winsor Type III microemulsion, that is a microemulsion that co-exists with both oil and water or brine, and which is made up of at least two commercially available alkyl polyglycoside surfactants or such surfactants together with a cosurfactant, in terms of a linear ethoxylated alcohol.

The present specification teaches specific surfactant compositions which are stable over a wide range of temperature and salinity conditions encountered during certain well operations.

Thus, in accordance with one aspect of the invention, the composition to be used comprises a first alkyl polyglycoside surfactant; and a second surfactant selected from a group consisting of an alkyl polyglycoside having an alkyl chain length of C4 to C20 and an ethoxylated alcohol wherein the concentration of both surfactants together in an aqueous solution is in a range of 0.5% to 10.0% by weight and further wherein the concentration of the first alkyl polyglycoside surfactant and the second surfactant is such as to provide a pseudo hydrophile-lipophile balance of the composition in a range of at least 9.8 to 10.8 and a solubilization in oil and water of at least about 1.99 at a temperature of about 130°F.

Further in accordance with the invention, the surfactant compositions consist essentially of a first surfactant selected from the group consisting of alkyl polyglycosides containing alkyl groups containing an odd number of carbon atoms from 9 to 13 carbon atoms and preferably having an oligomer distribution from 1 to 12 and a second surfactant selected from the group consisting of alkyl polyglycosides containing alkyl groups containing from about 12 to about 18 carbon atoms and preferably having an oligomer distribution from 1 to 12.

Yet further in accordance with the invention, the surfactant composition further includes a third surfactant selected from the group consisting of linear ethoxylated alcohols containing from about 8 to about 12 carbon atoms and from about 2 to about 8 ethylene oxide groups.

In accordance with an embodiment of the invention, the surfactant composition has a predetermined solubilization parameter in oil and water and wherein said surfactant composition is made up of a first surfactant comprising an alkyl polyglycoside and a second surfactant comprising at least one of an alkyl polyglycoside and a linear ethoxylated alcohol, wherin the use comprises the steps of (a) determining the concentrations of said surfactants which will provide said predetermined solubilization parameter by mixing a known volume of oil together with a known volume of a solution of surfactant composition and one of water or brine, measuring the volume of a type III microemulsion occupying a volume previously occupied by the oil and measuring the volume of said microemulsion previously occupied by said water or brine and surfactant solution; and (b) varying the concentrations of the surfactants in said solution and repeating step (a) until said predetermined solubilization is provided in a range of concentration of said first surfactant and said second surfactant which forms said microemulsion as defined in claim 2.

Those skilled in the art will further appreciate the above noted aspects of the invention together with other superior features thereof upon reading the detailed description which follows in conjunction with the drawing.

### BRIEF DESCRIPTION OF THE DRAWINGS

FIGURE 1 is a diagram of the molecular structure of an alkyl polyglycoside;
FIGURE 2 shows four oil/water systems including Type I, Type II and Type III microemulsions;
FIGURES 3 through 6 are diagrams showing the solubilization parameters of oil and water as a function of a pseudo hydrophile-lipophile balance (PHLB) number for a Type III microemulsion for several exemplary surfactant compositions in accordance with the invention.

### DESCRIPTION OF PREFERRED EMBODIMENTS

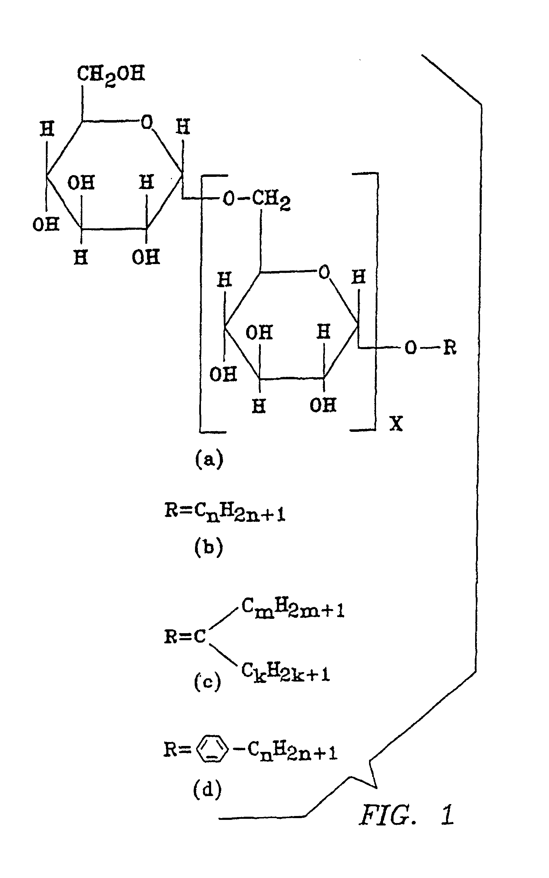

Alkyl polyglycoside surfactants consist of a polar glucose head and an organic carbon chain off of the hemiacetal linkage. A representation of the molecule is shown in FIGURE 1(a). There are two ether oxygens and three hydroxyl groups per glucose unit, plus a terminal hydroxyl group. The lipophilic portion of the molecule resides in the alkyl chain wherein R can be a linear alkyl chain, as indicated in FIGURE 1(b), and wherein n preferably ranges from 4 to 20. Alternatively, R can be a branched alkyl chain, as indicated in FIGURE 1(c), wherein m and k are odd or even numbers and m is equal to k + 2, or an alkyl phenol chain as indicated in FIGURE 1(d). The polymerization reaction can provide oligomer distributions from x = 0 to x = 12.

Generally, alkyl polyglycoside surfactants have no cloud point limitation as do ethoxylated alcohols. Moreover, ethoxylated alcohol surfactants are sensitive to temperature variation as normally encountered in wellbore operations and they are subject to a narrowing of the Winsor Type III microemulsion range and become more oil soluble and oil-like at temperature gradients normally encountered in wellbore operations (for example, ambient surface temperature to about 177°C (350°F) or higher bottom-hole temperature). In this regard surfactant solutions which comprise substantially ethoxylated alcohols have not been highly successful in completely cleaning out a wellbore to remove oil based drilling fluids as well as hydrocarbon based pipe sealants and lubricants which remain in a well in significant quantities upon completion of the installation of the casing as well as the production or working tubing strings. It has been determined that the removal of these materials from the wellbore usually improves fluid production from oil wells.

It is not unusual that the fluid remaining in a wellbore upon completion of the drilling and casing installation process can contain a significant amount of brine. Accordingly, when the cleaning process is to be carried out it is also desirable to provide a cleaning solution which is stable over a relatively wide range of temperatures, is tolerant of both caustic and acidic fluid compositions, which may be used to facilitate the cleaning process and which is tolerant of a relatively wide range of salinity of the fluids to be displaced from the well. The compositions in accordance with the present invention exhibit a Winsor Type III microemulsion which actually expands its breadth, as a function of HLB number with increasing temperature rather than decreasing in breadth. Winsor Type III microemulsions are discussed in more detail in "Micellization, Solubilization, and Microemulsions", Volume 2, K.L. Mittal, Plenum Press, New York, 1977.

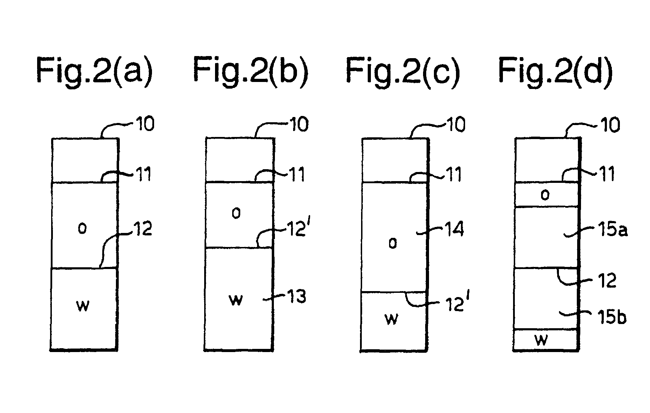

In FIGURE 2, Type I, Type II and Type III microemulsions are shown. FIGURE 2(a) shows oil (o) and water (w) containing surfactants in a container 10 to a level 11 and having an interface 12. In FIGURE 2(b) a Type I microemulsion 13 which is an oil-in-water microemulsion is shown below an excess oil layer. Such microemulsions are water soluble and contain quantities of solubilized oil as shown by the level of the new interface 12' which is above the original interface 12. In FIGURE 2(c) a Type II microemulsion 14 which is a water-in-oil microemulsion is shown above an excess water layer. Such microemulsions are oil soluble and contain quantities of solubilized water as shown by the level of new interface 12' which is below the original interface 12. FIGURE 2(d) shows a Type III microemulsion 15 which contains both solubilized oil and water and is located at and extends above and below original interface 12. Such Type III microemulsions are preferred for wellbore operations since their interfacial tensions and solubilization properties toward both oil and water can greatly facilitate the removal of both from the wellbore during cleaning operations.

In one aspect, the present invention contemplates that linear alkyl ethoxylated alcohol cosurfactants may be provided in the surfactant composition wherein the alcohol alkyl chain length varies from C6 to C18, and preferably from C8 to C12 and the ethylene oxide groups in combination with the alkyl chain lengths provide an HLB number in the range of about 4.0 to 11.0 or 12.0 and preferably from about 8.0 to about 11.0.

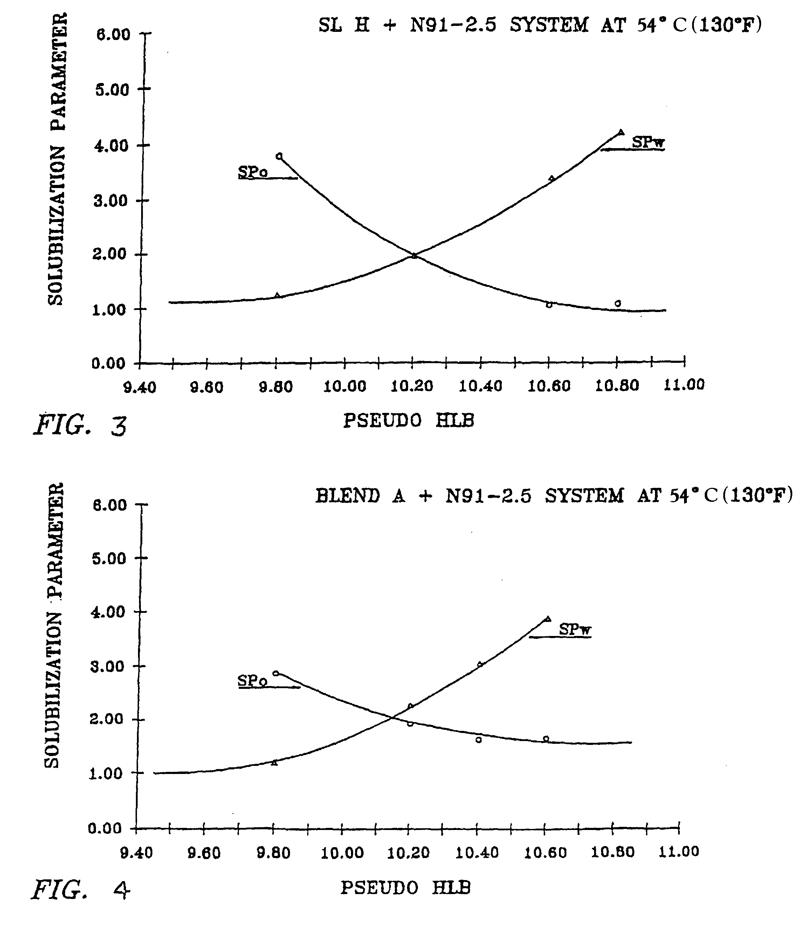

In developing a surfactant composition to be used in accordance with the present invention the solubilization parameter, which is described hereinbelow, for solubilizing substantially all of the oil in the environment in which the composition is to be used, does not need to be any greater than that which can be determined by testing a sample of the fluid to be cleaned or removed from the area in question. This may be predetermined by determining the concentration of oil based materials, for example, by determining the concentration of oil based contaminants in a formation to be acidized (from a core sample of the formation material), or by determining the concentration of oil based contaminants in the drilling fluid occupying the well annulus to be cemented by an improved cement composition including an alkyl polyglycoside surfactant in accordance with the invention. When the optimum solubilization parameter has been determined then a blend of surfactants which will provide that solubilization parameter and minimum interfacial tension in a middle-phase microemulsion is provided from data such as that presented in FIGURES 3 through 6.

The HLB number used in the diagrams of FIGURES 3 through 6 is a "pseudo" HLB number (PHLB) which is derived by multiplying the molar fraction of each surfactant in the surfactant composition by its HLB number and summing the results to arrive at the "pseudo" HLB number. For example, if surfactant A has an HLB of 12.0 and is present in the composition as 0.80 mole fraction then its contribution to the HLB number is 9.6 and if surfactant B has an HLB number of 10.0 and is present in the composition as 0.20 mole fraction then its contribution to the HLB number is 2.0, providing a combined "pseudo" HLB number of 11.6.

The solubilization parameter described herein may be determined by providing a known quantity of oil together with a known quantity of surfactant and water or brine, mixing the two thoroughly, equilibrating in a constant temperature water or air bath, and then measuring the amount of Type I or II, or III microemulsion occupying the volume previously occupied by oil and/or previously occupied by the water. The volume of oil (15a) in FIGURE 2(d) or water (15b) in FIGURE 2(d) now occupied by the microemulsion after mixing divided by the volume of active surfactant composition in the original aqueous surfactant solution (w) in FIGURE 2(a) determines the values of the solubilization parameters for oil (SPₒ) and for water (SP_{w}), respectively.

It is contemplated that a surfactant composition having a blend of at least two alkyl polyglycoside surfactants and a linear ethoxylated alcohol described herein, wherein the total concentration of the surfactant in an aqueous solution is about 0.5% to 10% by weight, will be capable of forming a type III microemulsion in a temperature range of about 15.6°C (60°F) to 177°C (350°F). It is contemplated that a surfactant composition having a blend of at least two alkyl polyglycoside surfactants wherein the total concentration of the surfactant in an aqueous solution is about 0.1% to 10% by weight, will be capable of forming a Type III microemulsion in a temperature range of about 80°F to 350°F. The total concentration of surfactant as well as the blend of alkyl polyglycoside surfactants and linear ethoxylated alcohol surfactant will be dependent on the concentration of oil based material to be removed from a site being treated.

One surfactant composition to be used in accordance with the invention as defined in claim 1 comprises a blend of two alkyl polyglycoside surfactants capable of forming a type III microemulsion in specific oil/water systems. The blend of the two surfactants may be tailored to the need for wettability versus emulsification. For example, as discussed hereinbefore, wettability of cement particles in a cement slurry may be more important than emulsifying oil contaminants in a wellbore or in the cement composition. Moreover, the HLB number may be modified by blending the two alkyl polyglycoside surfactants in proportions which will give the desired HLB. For wettability, a higher proportion of a short alkyl chain length alkyl polyglycoside may be used in the surfactant composition. For example, a composition having an alkyl chain length of C4 having an HLB number of 16.3 may be mixed with an alkyl polyglycoside having a chain length of C11 and an HLB of 12.4. Alternatively, an alkyl polyglycoside surfactant having an alkyl chain length of C4 or C11 may be blended with a blend of alkyl polyglycosides of alkyl chain lengths of C12, C14 and C16, said blend having an HLB 11.7. These surfactant compositions are capable of forming a middle-phase or type III microemulsion with a solubility in water and oil which can be maximized at a particular HLB. For example, a mixture of 50% by weight of each of an alkyl polyglycoside surfactant having an alkyl chain length of C11 and an HLB of 12.4 with an alkyl polyglycoside having an HLB of 11.7 would yield a composition with an HLB of 12.06. Such a composition will produce a microemulsion with good solubilization parameter values at higher temperatures. An HLB range that provides a type III microemulsion may then be selected and the surfactant blend quantities adjusted accordingly.

The two alkyl polyglycoside surfactants may consist of a first alkyl polyglycoside selected from the group consisting of alkyl polyglycosides containing alkyl groups containing an odd number of carbon atoms from about 9 to 13 with an oligomer distribution from 1 to 12 and a second alkyl polyglycoside surfactant selected from the group consisting of alkyl polyglycosides containing alkyl groups containing from about 12 to about 18 carbon atoms and having an oligomer distribution from 1 to 12. Preferably the surfactant compositions contain from about 20 to about 90 mole percent of the first surfactant and from about 10 to about 80 mole percent of the second surfactant. The second surfactant may contain alkyl groups containing odd or even numbers or both even and odd numbers of carbon atoms within the range from about 12 to about 18 carbon atoms. Preferably the second surfactant contains from about 50 to about 75 weight percent alkyl polyglycosides containing 12 carbon atoms.

Preferably, the first surfactant consists essentially of alkyl polyglycosides containing alkyl groups which contain 11 carbon atoms. The alkyl polyglycosides used as the second surfactant are more readily available commercially with alkyl groups which contain even numbers of carbon atoms. The even numbered alkyl groups are representative of naturally occurring alkyl groups. The alkyl groups containing odd numbers of carbon atoms are typically produced in petroleum refining operations and the like. The alkyl polyglycosides containing alkyl groups containing even numbers of carbon atoms are much more viscous than the alkyl polyglycosides containing petroleum based alkyl groups containing odd numbers of carbon atoms in a comparable carbon atom range. Alkyl polyglycosides containing longer and even numbered alkyl groups have high pour points and may be solid or semi-solid alkyl polyglycosides at room temperature. Accordingly, from about 20 to about 90 mole percent of the first surfactant is preferably used in the surfactant compositions to provide the desired blends with a suitable viscosity for mixing the surfactants and for ease of handling as blended.

In another embodiment of the invention, the surfactant composition comprises a blend of two alkyl polyglycoside surfactants as described above and a linear ethoxylated alcohol. The linear ethoxylated alcohols are commercially available and contain from about 8 to about 12 carbon atoms and from about 2 to about 8 ethylene oxide groups per molecule of alcohol and are desirably present in amounts from about 10 to about 50 mole percent of the total of the first, second and third surfactants.

FIGURE 3 illustrates a diagram of the solubilization parameter versus the PHLB number for one preferred surfactant solution in accordance with the invention and characterized by an alkyl polyglycoside surfactant having an alkyl chain length of C₁₁ together with a linear alkyl ethoxylated alcohol cosurfactant wherein the total surfactant concentration was 3.63% by weight in an aqueous solution which also contained 2.76% by weight calcium chloride. Various concentrations of alkyl polyglycoside and ethoxylated alcohol were tested to provide the pseudo HLB (PHLB) numbers indicated while the total concentration of surfactant was held at 3.63%. In each of the tests shown in FIGURES 3 through 6, the composition was 80% water, surfactant and calcium chloride by volume and 20% oil. The solubilization test was carried out at a temperature of 130 F. The "oil" was a synthetic organic drilling fluid base (hereinafter sometimes referred to as the EMN fluid) made up of commercially available compositions including a rheology modifying agent sold under the trade name NOVAMOD, an emulsifier sold under the trade name NOVAMOL and a synthetic oil sold under the trade name NOVASOL. The NOVAMOD, NOVAMOL and NOVASOL compositions were provided in the ratio of 1:4:82 by weight. The above-mentioned compositions are commercially available from MI Drilling Fluids, Inc., Houston, Texas. The cosurfactant was a linear ethoxylated alcohol having an alkyl chain length of C₉ to C₁₁. A commercial cosurfactant meeting the specification was used and is sold under the trade name NEODOL 91-2.5 by Shell Chemical Company, Houston, Texas. The NEODOL 91-2.5 cosurfactant has an HLB number of 8.5.

The composition of FIGURE 3 exhibited a Winsor Type III microemulsion for a range of PHLB of from 9.8 to 10.8 and an optimum solubilization parameter of about 1.99 at the intersection of the curves representing solubilization of oil and water, respectively, and at a PHLB of 10.20. The alkyl polyglycoside surfactant used is manufactured and sold under the trade name SIMULSOL SL 11 by Seppic, Inc., Fairfield, New Jersey. The SIMULSOL SL 11 surfactant has an alkyl chain length of C₁₁ and an HLB of 12.4. SIMULSOL SL 11 surfactant is a non-ionic cleanser primarily developed for household cleaning applications.

Referring now to FIGURE 4, there is illustrated a diagram similar to FIGURE 3 showing the solubilization parameter of oil and water as a function of the PHLB number for a surfactant composition totalling 3.63% by weight of a solution of water and calcium chloride wherein the content of calcium chloride is about 2.76% by weight. The surfactant in the solution was characterized by a mixture of alkyl polyglycoside and ethoxylated alcohol surfactants wherein the alkyl polyglycoside surfactant comprised 80 mole percent of an alkyl polyglycoside such as the SIMULSOL SL 11 surfactant and 20 mole percent of an alkyl polyglycoside surfactant, also developed by Seppic, Inc. under their designation SIMULSOL SL 26 and in itself being characterized by a blend of alkyl chain lengths of C₁₂, C₁₄ and C₁₆, respectively, wherein about 65 weight percent to 70 weight percent of surfactant of alkyl chain length C₁₂ was typically present. The alkyl polyglycoside surfactant blend in FIGURE 4 carries the designation Blend A. The SIMULSOL SL 26 surfactant has an HLB of 11.7, and gives the Blend A surfactant an HLB number of 12.27. The cosurfactant was, as indicated, the Neodol 91-2.5 ethoxylated alcohol. The total solution comprised 80 volume percent of water with surfactant and calcium chloride and 20 volume percent EMN fluid, and the values derived in FIGURE 4 are also based on tests at 130 F. FIGURE 4 indicates that a PHLB range of 9.8 to 10.6 was achievable for a Winsor Type III microemulsion and that the optimal solubilization of 2.08 occurred at a PHLB number of 10.15.

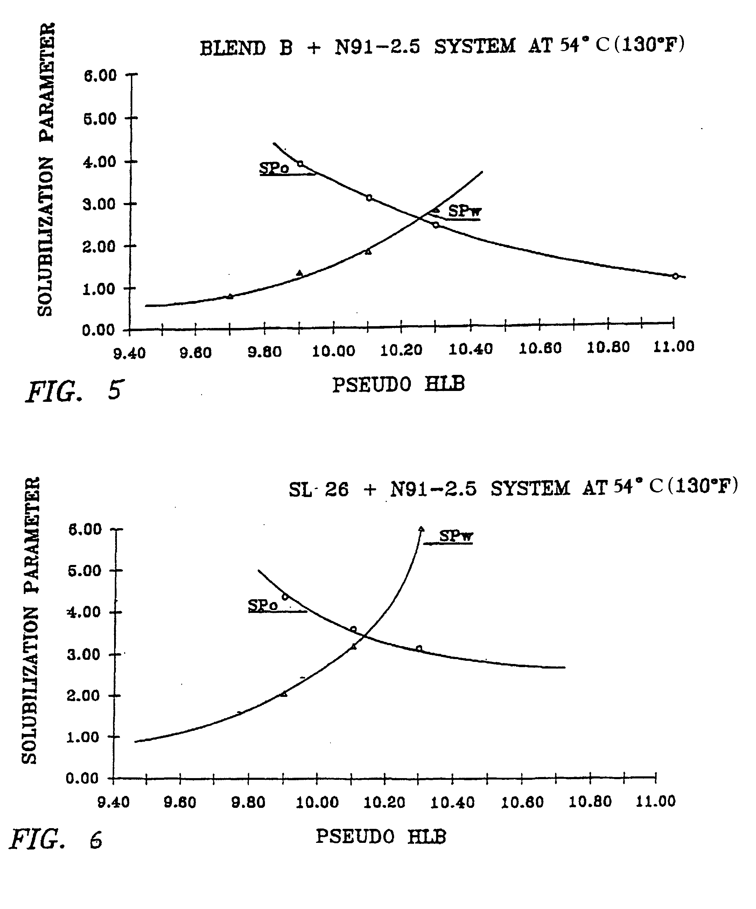

Still further as shown in FIGURE 5, a surfactant Blend B comprised of 60 mole percent SIMULSOL SL 11 surfactant and 40 mole percent SIMULSOL SL 26 surfactant, provided as the alkyl polyglycoside component, together with the ethoxylated alcohol, NEODOL 91-2.5 cosurfactant, totalling 3.63% by weight, was provided in a solution which comprised 2.76% calcium chloride and wherein the surfactant blend and calcium chloride were mixed in water providing a solution which was 80 volume percent of the total mixture whereas 20 volume percent was the EMN fluid. As shown in FIGURE 5, the Winsor Type III microemulsion existed between a smaller PHLB range of 9.8 to 10.4 and a larger optimum solubilization of 2.47, a 24% increase over Blend A shown in FIGURE 4, occurred at PHLB 10.26. These tests were also carried out at 130°F.

Looking now at FIGURE 6, a microemulsion was obtained with the Seppic SIMULSOL SL 26 surfactant together with the ethoxylated linear alcohol, Neodol 91-2.5, provided in a total amount of 3.63% in the aqueous calcium chloride solution at 130 F. FIGURE 6 indicates that the Type III microemulsion existed in range of PHLB number from 9.8 to 10.3 and an optimum solubilization of about 3.62, an 82% increase over Blend A, was obtained at a PHLB of 10.14. The alkyl polyglycoside surfactant in the test shown in FIGURE 6 was 100% of the commercially available surfactant SIMULSOL SL 26 made up of alkyl chain lengths C₁₂, C₁₄, and C₁₆, previously described.

Accordingly, from the foregoing description, it will be appreciated that a unique use of a surfactant composition has been developed as defined in claim 1 wherein said composition being characterized by an alkyl polyglycoside composition which is made up of one or more specific alkyl chain length polyglycoside surfactants together with a cosurfactant in terms of a linear ethoxylated alcohol or blends of two or more alkyl polyglycoside surfactants, and further wherein solubilization parameter in both water and oil in a middle-phase or type III microemulsion, over a broad range of so-called pseudo hydrophile-lipophile balance numbers. The surfactants are preferably provided in concentrations which provide a hydrophile-lipophile balance of the solution in a range from about 9.8 to about 11.4 and a solubilization parameter of the oil and water in the wellbore of at least about 1.99 at a temperature of about 54°C (130°F). These surfactant compositions are particularly useful for wellbore cleanout operations wherein the salinity and temperature extremes to which the cleanout composition is exposed will not result in degradation of the composition or loss of its effectiveness.

It is contemplated that the surfactant compositions described herein may be included in a wellbore operation such as acidizing a formation interval adjacent to a wellbore and from which formation fluids are desired to be produced. For example, acidizing operations are typically carried out to improve formation productivity by first injecting a "bank" of ammonium salt based brine such as ammonium chloride brine wherein the concentration of ammonium chloride is in the range of about 1.0% to 5.0% by weight. This solution is injected as a so-called preflush solution into the formation interval through the well from which production fluids will eventually be produced. The second step is to inject an acid solution such as a weak, acetic or formic acid solution having a concentration of 1.0% to 15.0%. Alternatively, or in addition, a strong acid solution such as hydrochloric acid in the range of 1.0% to 15.0% may also be injected after or in place of the weak acid solution.

However, conventional acidizing treatments do not adequately dissolve oil based compositions of the type described herein. In this regard, it is contemplated that an acidizing treatment may be carried out wherein, during the injection of the acid solution, a quantity of surfactant composition of the type described herein may be included in the aqueous acid solution in the range of about 0.1 % to 10.0% by weight of the surfactant blend including one or more of those described hereinabove.

Still further, the use of the compositions of the present invention as defined in claim 1 may be in conjunction with well cementing operations by including one or more of the above-mentioned alkyl polyglycoside surfactants as a blend, or as one of those commercially available together, with the linear ethoxylated alcohol cosurfactant. The total the composition is in a Type III microemulsion as defined in claim 1 with solubilization of water and oil which can be maximized at a particular HLB number or pseudo HLB number and wherein a significant solubilization of both water and oil can be obtained to provide the Type III microemulsion over a fairly broad range of HLB or PHLB number. By selectively varying the concentration of surfactants in the aqueous solution or in an aqueous acid solution or in an aqueous alkaline solution of a cement material, improved wellbore operations of the types described hereinabove may be realized.

The selected surfactants are prepared in an aqueous solution, which may include a chloride brine, such as calcium and/or sodium chloride, and a quantity of an oil or organic fluid which exhibits properties of oil and tested to determine when a Type III microemulsion is present for a calculated HLB or PHLB number and a solubilization parameter as described above is ascertained for the Type III microemulsion for a given HLB or PHLB number. The concentrations of the selected surfactants are then varied, respectively, while maintaining the total concentration of surfactant constant until a microemulsion fails to develop.

In each instance, it is contemplated that an optimum or balanced solubilization of oil and water may be achieved within the Type III microemulsion range, such as evidenced by the sample compositions described and illustrated in FIGURES 3 through 6. If a requisite solubilization has been predetermined, as indicated by the amount of oil based material present in the fluid to be displaced from a well, or pipelines or other cleaning operation, the blend of selected surfactants and the relative concentrations of the surfactants may be, respectively, preselected to meet the solubilization needed. This should be done while maintaining as broad a range of HLB or PHLB number as possible in order to provide acceptable cleaning at variable temperature and salinity conditions existing in the well or the earth formation interval being treated.

## Claims

1. Use in an oil-containing well, of a surfactant composition in a Winsor Type III microemulsion of said oil, and water or a brine, and said surfactant composition, wherein said surfactant composition is made up of a first surfactant comprising an alkyl polyglycoside and a second surfactant comprising at least one of another alkyl polyglycoside and a linear ethoxylated alcohol.

2. Use in accordance with claim 1, wherein a surfactant composition is used, the concentrations of said surfactants having been determined in a solution of said surfactant composition and one of said water or brine, which concentrations will provide a solubilization parameter such that a Winsor Type III microemulsion is obtained, said concentrations having been determined:
(a) by mixing a known volume of said oil together with a known volume of said solution, measuring the volume of said Winsor Type III microemulsion occupying a volume previously occupied by said oil and measuring the volume of said Winsor Type III microemulsion previously occupied by said solution; and
(b) varying the concentrations of the surfactants in said solution and repeating step (a), said concentrations used being such that said solubilization parameter is provided in a range of concentrations of said first surfactant and said second surfactant which forms said Winsor Type III microemulsion.

3. Use in accordance with claim 2, wherein said surfactant composition is used in a range of 0.5 % to 10.0 % by weight of the first surfactant and the second surfactant, collectively, in said solution.

4. Use in accordance with any of claims 1 to 3, wherein said first surfactant is selected from alkyl polyglycoside surfactants containing alkyl groups containing an odd number of carbon atoms from 9 to 13, and the second surfactant is selected from alkyl polyglycosides containing alkyl groups containing from 12 to 18 carbon atoms.

5. Use in accordance with claim 4, wherein the alkyl groups of said first surfactant and said second surfactant have an oligomer distribution from 1 to 12.

6. Use in accordance with any of the preceding claims, wherein the first alkyl polyglycoside surfactant has an alkyl chain length of 11 carbon atoms.

7. Use in accordance with any of the preceding claims, wherein said first surfactant comprises a mixture of alkyl polyglycoside surfactants having an alkyl chain length of C11 and a mixture of surfactants having an alkyl chain length of C12 to C16.

8. Use in accordance with any of the preceding claims, wherein said first surfactant and said second surfactant are used in concentrations which provide a pseudo hydrophile lipophile balance of said surfactant composition in a range of at least 9.8 to 10.8 and a solubilization parameter of said surfactant composition in said oil and said water or brine of about at least 1.99 at a temperature of about 54°C (130°F), wherein the pseudo hydrophile lipophile balance is derived by multiplying the molar fraction of each surfactant in the surfactant composition by its hydrophile lipophile balance (HLB) number and summing the results, and wherein the solubilization parameter is at the intersection of the curves representing solubilization for said oil (SPo) and said water or brine (SP_{w}), respectively, which are determined by dividing the volume of said oil occupied by the Winsor Type III microemulsion and the volume of said water or brine occupied by the Winsor Type III microemulsion, respectively, by the volume of the surfactant composition in said solution.

9. Use in accordance with any of the preceding claims, wherein the first surfactant is selected from the group consisting of alkyl polyglycosides containing alkyl groups containing an odd number of carbon atoms from 9 to 13 and the second surfactant is selected from the group consisting of alkyl polyglycosides containing alkyl groups containing an even number of carbon atoms from 12 to 18.

10. Use in accordance with any of the preceding claims, wherein the first surfactant comprises at least about 20 mole percent of the total concentration of said first and second surfactants.

11. Use in accordance with claim 10, wherein the first surfactant comprises from about 20 to about 90 mole percent of the total concentration of said first and second surfactants.

12. Use in accordance with any of claims 9, 10 or 11, wherein the second surfactant consists essentially of alkyl polygylcosides containing alkyl groups containing an even number of carbon atoms from about 12 to about 16 carbon atoms.

13. Use in accordance with any of claims 1 to 8, wherein the first surfactant is an alkyl polyglycoside having an alkyl chain length of 11 carbon atoms and the second surfactant is selected from the group consisting of alkyl polyglycosides containing alkyl groups containing an even number of carbon atoms from 12 to 18.

14. Use in accordance with any of claims 9, 10 or 11, wherein the second surfactant contains from about 50 to about 75 weight percent alkyl polyglycosides containing alkyl groups containing 12 carbon atoms.

15. Use in accordance with any of claims 9 to 13, wherein a surfactant composition is used, which further includes a third surfactant selected from the group consisting of linear ethoxylated alcohols containing from about 8 to about 12 carbon atoms and containing from about 2 to about 8 ethylene oxide groups.

16. Use in accordance with claim 15, wherein the third surfactant comprises from about 10 to about 50 mol percent of the total of the first, second and third surfactants.

17. Use in accordance with any of the preceding claims, which further includes mixing the surfactant composition with water so that the mixture contains from about 0.1 to 10.0 weight percent of the surfactants.

18. Use in accordance with claim 15, 16 or 17, wherein the first, second and third surfactants are used in concentrations which provide a pseudo hydrophile lipophile balance of said surfactant composition in a range of at least 9.8 to 11.4 and a solubilization parameter of said surfactant composition in said oil and said water or brine of about at least 1.99 at a temperature of about 54°C (130°F), wherein the pseudo hydrophile lipophile balance is derived by multiplying the molar fraction of each surfactant in the surfactant composition by its hydrophile lipophile balance (HLB) number and summing the results, and wherein the solubilization parameter is at the intersection of the curves representing solubilization for said oil (SPₒ) and said water or brine (SP_{w}), respectively, which are determined by dividing the volume of said oil occupied by the Winsor Type III microemulsion and the volume of said water or brine occupied by the Winsor Type III microemulsion, respectively, by the volume of the surfactant composition in said solution.

19. Use in accordance with any of the preceding claims, for removing oil based contaminants from a wellbore, wherein said oil is a sample of the oil based contaminants to be removed, comprising injecting said solution into the wellbore.

20. Use in accordance with claim 19, for solubilizing oil based materials disposed in an earth formation interval, wherein said oil is a sample of the oil based materials to be solubilized, comprising injecting an acid solution containing said surfactant composition in a concentration which will provide said solubilization parameter, into said earth formation interval.

21. Use in accordance with claim 1 or 2, in a cementing operation in a well, wherein the first surfactant comprises an alkyl polyglycoside having a chain length of C11 to C16, comprising injecting a cement composition comprising a cementitious material selected from the group consisting of Portland cement, slag, calcium carbonate, calcium aluminate, calcium sulfate, and magnesium/calcium oxide, water, and said surfactant composition, wherein the concentration of the first surfactant and the second surfactant together in said water is 0.5 % to 10.0 % by weight, into said well to dissolve oil based materials present on the surfaces of the wellbore wall and any structures disposed in said well coming into contact with said cement composition to improve the bonding of said cement composition to said surfaces.

## Patentansprüche

1. Verwendung einer oberflächenaktiven Zusammensetzung, welche in einer Mikroemulsion vom Winsor-Typ III aus Öl und Wasser oder Sole und der oberflächenaktiven Zusammensetzung vorliegt, in einem ölhaltigen Bohrloch, wobei die oberflächenaktive Zusammensetzung aus einem ersten oberflächenaktiven Mittel, umfassend ein Alkylpolyglykosid, und einem zweiten oberflächenaktiven Mittel, umfassend mindestens ein anderes Alkylpolyglykosid und einen linearen ethoxylierten Alkohol, hergestellt wird.

2. Verwendung nach Anspruch 1, wobei eine oberflächenaktive Zusammensetzung verwendet wird, die Konzentrationen der oberflächenaktiven Mittel in einer Lösung aus der oberflächenaktiven Zusammensetzung und entweder oder Wasser oder Sole bestimmt werden, die Konzentrationen dadurch einen Löslichkeitsparameter liefern, dass eine Mikroemulsion vom Winsor-Typ III erhalten wird und die Konzentration bestimmt wird durch:
(a) Vermischen einer bekannten Menge des Öls zusammen mit einer bekannten Menge der Lösung, Bestimmen des Volumens der Mikroemulsion vom Winsor-Typ III, welche ein Volumen einnimmt, das zuvor von dem Öl eingenommen wurde, und Bestimmen des Volumens der Mikroemulsion vom Winsor-Typ III, welche zuvor von der Lösung eingenommen wurde und
(b) Variieren der Konzentrationen der oberflächenaktiven Mittel in der Lösung und Wiederholen des Schrittes (a), wobei die verwendeten Konzentrationen derart sind, dass der Löslichkeitsparameter in einem Konzentrationsbereich des ersten oberflächenaktiven Mittels und des zweiten oberflächenaktiven Mittels, welches die Mikroemulsion vom Winsor-Typ III bildet, bereitgestellt wird.

3. Verwendung nach Anspruch 2, wobei die oberflächenaktive Zusammensetzung in einem Bereich von 0,5 bis 10,0 Gew.% des ersten oberflächenaktiven Mittels zusammen mit dem zweiten oberflächenaktiven Mittel in der Lösung verwendet wird.

4. Verwendung nach einem der Ansprüche 1 bis 3, wobei das erste oberflächenaktive Mittel aus oberflächenaktiven Alkylpolyglykosiden, enthaltend Alkylgruppen mit einer ungeraden Anzahl von Kohlenstoffatomen von 9 bis 13 und das zweite oberflächenaktiven Mittel aus Polyglykosiden, enthaltend Alkylgruppen mit 12 bis 18 Kohlenstoffatomen, gewählt ist.

5. Verwendung nach Anspruch 4, wobei die Alkylgruppen des ersten oberflächenaktiven Mittels und des zweiten oberflächenaktiven Mittels eine Oligomerverteilung von 1 bis 12 aufweisen.

6. Verwendung gemäß einem der vorstehenden Ansprüche, wobei das erste oberflächenaktive Alkylpolyglykosid eine Alkylkettenlänge von 11 Kohlenstoffatomen aufweist.

7. Verwendung nach einem der vorstehenden Ansprüche, wobei das erste oberflächenaktive Mittel ein Gemisch aus oberflächenaktiven Alkylpolyglykosiden mit einer Alkylkettenlänge von C11 und ein Gemisch von oberflächenaktiven Mittel mit einer Alkylkettenlänge von C12 bis C16 umfasst.

8. Verwendung nach einem der vorstehenden Ansprüche, wobei das erste oberflächenaktive Mittel und das zweite oberflächenaktive Mittel in Konzentrationen verwendet werden, welche ein Pseudo-Hydrophilie-Lipophilie-Gleichgewicht der oberflächenaktiven Zusammensetzung im Bereich von mindestens 9,8 bis 10,8 und einen Löslichkeitsparameter der oberflächenaktiven Zusammensetzung in Öl und Wasser oder Sole von mindestens etwa 1,99 bei einer Temperatur von etwa 54°C (130°F) bereitstellt, wobei das Pseudo-Hydrophilie-Lipophilie-Gleichgewicht durch Multiplizieren des molaren Anteils des jeweiligen oberflächenaktiven Mittels in der oberflächenaktiven Zusammensetzung mit dem Wert des Hydrophilie-Lipophilie-Gleichgewichts (HLB) und Zusammenzählen der Ergebnisse abgeleitet wird, und wobei der Löslichkeitsparameter an der Kreuzung der Kurven, welche die Löslichkeit des Öls (SPₒ) bzw. des Wassers oder Sole (SP_{w}) liegt, welche durch Division des Volumens des Öls, welches von der Mikroemulsion vom Winsor-Typ III eingenommen wird, bzw. des Volumens des Wassers oder Sole, welches von der Mikroemulsion vom Winsor-Typ III eingenommen wird, durch das Volumen der oberflächenaktiven Zusammensetzung in der Lösung, bestimmt werden.

9. Verwendung nach einem der vorstehenden Ansprüche, wobei das erste oberflächenaktive Mittel aus der Gruppe, bestehend aus Alkylpolyglykosiden mit Alkylgruppen, enthaltend eine ungerade Anzahl von Kohlenstoffatomen von 9 bis 13, gewählt wird und das zweite oberflächenaktive Mittel aus der Gruppe, bestehend aus Alkylpolyglykosiden mit Alkylgruppen mit einer geraden Anzahl von Kohlenstoffatomen von 12 bis 18, gewählt wird.

10. Verwendung nach einem der vorstehenden Ansprüche, wobei das erste oberflächenaktive Mittel mindestens etwa 20 mol% der Gesamtkonzentration der ersten und zweiten oberflächenaktiven Mittel umfasst.

11. Verwendung nach Anspruch 10, wobei das erste oberflächenaktive Mittel etwa 20 bis etwa 90 mol% der Gesamtkonzentration des ersten und des zweiten oberflächenaktiven Mittels umfasst.

12. Verwendung nach einem der Ansprüche 9, 10 oder 11, wobei das zweite oberflächenaktive Mittel im wesentlichen aus Alkylpolyglykosiden mit Alkylgruppen mit einer geraden Anzahl von Kohlenstoffatomen mit etwa 12 bis etwa 16 Kohlenstoffatomen besteht.

13. Verwendung nach einem der Ansprüche 1 bis 8, wobei das erste oberflächenaktive Mittel ein Alkylpolyglykosid mit einer Alkylkettenlänge von 11 Kohlenstoffatomen und das zweite oberflächenaktive Mittel aus der Gruppe, bestehend aus Alkylpolyglykosiden mit Alkylkettenlänge mit einer geraden Anzahl von Kohlenstoffatomen von 12 bis 18 gewählt wird.

14. Verwendung nach einem der Ansprüche 9, 10 oder 11, wobei das zweite oberflächenaktive Mittel etwa 50 bis etwa 75 Gewichtsprozent Alkylpolyglykoside mit Alkylgruppen mit 12 Kohlenstoffatomen enthält.

15. Verwendung nach einem der Ansprüche 9 bis 13, wobei eine oberflächenaktive Zusammensetzung verwendet wird, welche ferner ein drittes oberflächenaktives Mittel enthält, gewählt aus der Gruppe, bestehend aus linearen ethoxylierten Alkoholen mit etwa 8 bis etwa 12 Kohlenstoffatomen und etwa 2 bis etwa 8 Ethylenoxid-Gruppen.

16. Verwendung nach Anspruch 15, wobei das dritte oberflächenaktive Mittel etwa 10 bis etwa 50 mol% des ersten, zweiten und dritten oberflächenaktiven Mittels umfasst.

17. Verwendung nach einem der vorstehenden Ansprüche, welche ferner das Vermischen der oberflächenaktiven Zusammensetzung mit Wasser einschließt, so dass das Gemisch etwa 0,1 bis 10,0 Gewichtsprozent oberflächenaktive Mittel enthält.

18. Verwendung nach Anspruch 15, 16 oder 17, wobei das erste, zweite und dritte oberflächenaktive Mittel in Konzentrationen verwendet werden, welche ein Pseudo-Hydrophilie-Lipophilie-Gleichgewicht der oberflächenaktiven Zusammensetzung im Bereich von mindestens 9,8 bis 10,8 und einen Löslichkeitsparameter der oberflächenaktiven Zusammensetzung in Öl und Wasser oder Sole von mindestens etwa 1,99 bei einer Temperatur von etwa 54°C (130°F) bereitstellt, wobei das Pseudo-Hydrophilie-Lipophilie-Gleichgewicht durch Multiplizieren des molaren Anteils des jeweiligen oberflächenaktiven Mittels in der oberflächenaktiven Zusammensetzung mit dem Wert des Hydrophilie-Lipophilie-Gleichgewichts (HLB) und Zusammenzählen der Ergebnisse abgeleitet wird, und wobei der Löslichkeitsparameter an der Kreuzung der Kurven, welche die Löslichkeit des Öls (SPₒ) bzw. des Wassers oder Sole (SP_{w}) liegt, welche durch Division des Volumens des Öls, welches von der Mikroemulsion vom Winsor-Typ III eingenommen wird, bzw. des Volumens des Wassers oder Sole, welches von der Mikroemulsion vom Winsor-Typ III eingenommen wird, durch das Volumen der oberflächenaktiven Zusammensetzung in der Lösung, bestimmt werden.

19. Verwendung nach einem der vorstehenden Ansprüche zum Entfernen von Kontaminationen auf Ölbasis aus einem Bohrloch, wobei das genannte Öl ein Beispiel für zu entfernende Kontaminationen auf Ölbasis ist, umfassend das Einleiten der Lösung in das Bohrloch.

20. Verwendung nach Anspruch 19 zum Löslichmachen von Materialien auf Ölbasis, die in einer Erdschicht vorliegen, wobei das genannte Öl ein Beispiel für ein löslichzumachendes Material ist, umfassend das Einleiten einer Säurelösung, umfassend die oberflächenaktive Zusammensetzung in einer Konzentration, welche die Löslichkeitsparameter bereitstellt, in die Erdschicht.

21. Verwendung nach Anspruch 1 oder 2 beim Verfestigen eines Lochs, wobei das erste oberflächenaktive Mittel ein Alkylpolyglykosid mit einer Kettenlänge von C11 bis C16 umfasst, umfassend Einleiten einer Zementzusammensetzung, umfassend eines zementartigen Materials, gewählt aus der Gruppe, bestehend aus Portlandzement, Schlacke, Kalziumkarbonat, Kalziumaluminat, Kalziumsulfat und Magnesium/Kalziumoxid, Wasser und die oberflächenaktive Zusammensetzung, wobei die Konzentration des ersten oberflächenaktiven Mittels und des zweiten oberflächenaktiven Mittels zusammen im Wasser 0,5 % bis 10,0 Gew.% beträgt, in das Loch, um Stoffe auf Ölbasis, die an der Oberfläche der Bohrlochwände und in anderen Strukturen im Loch, welche mit der Zementzusammensetzung in Kontakt kommen, aufzulösen und somit die Bindung der Zementzusammensetzung an die Oberflächen zu verbessern.

## Revendications

1. Utilisation, dans un puits de pétrole, d'une composition tensioactive dans une microémulsion Winsor de type III dudit pétrole, et d'eau ou d'une saumure, et de ladite composition tensioactive, ladite composition tensioactive étant constituée d'un premier tensioactif comprenant un alkylpolyglycoside et d'un deuxième tensioactif comprenant soit un autre alkylpolyglycoside, soit un alcool éthoxylé à chaîne droite, soit les deux.

2. Utilisation selon la revendication 1, pour laquelle on utilise une composition tensioactive, la concentration desdits tensioactifs ayant été déterminée dans une solution de ladite composition tensioactive et de ladite eau ou de ladite saumure, ces concentrations donnant un paramètre de solubilisation tel que l'on obtienne une microémulsion Winsor de type III, les concentrations ayant été déterminées :
(a) par mélange d'un volume connu dudit pétrole avec un volume connu de ladite solution, mesure du volume de ladite microémulsion Winsor de type III occupant un volume précédemment occupé par ledit pétrole, et mesure du volume de ladite microémulsion Winsor de type III précédemment occupé par ladite solution ; et
(b) par une variation de la concentration des tensioactifs dans ladite solution et répétition de l'étape (a), lesdites concentrations utilisées étant telles que le paramètre de solubilisation se trouve dans une plage de concentrations dudit premier tensioactif et dudit deuxième tensioactif formant ladite microémulsion Winsor de type III.

3. Utilisation selon la revendication 2, pour laquelle ladite composition tensioactive est utilisée avec collectivement dans ladite solution une quantité de 0,5 à 10,0 % en poids du premier tensioactif et du deuxième tensioactif.

4. Utilisation selon l'une quelconque des revendications 1 à 3, pour laquelle ledit premier tensioactif est choisi parmi les tensioactifs alkylpolyglycosides contenant des groupes alkyle ayant un nombre impair d'atomes de carbone, allant de 9 à 13, et le deuxième tensioactif est choisi parmi les alkylpolyglycosides contenant des groupes alkyle ayant de 12 à 18 atomes de carbone.

5. Utilisation selon la revendication 4, pour laquelle les groupes alkyle dudit premier tensioactif et dudit deuxième tensioactif présentent une distribution des oligomères de 1 à 12.

6. Utilisation selon l'une quelconque des revendications précédentes, pour laquelle le premier tensioactif alkylpolyglycoside a une longueur de chaîne alkyle de 11 atomes de carbone.

7. Utilisation selon l'une quelconque des revendications précédentes, pour laquelle ledit premier tensioactif comprend un mélange de tensioactifs alkylpolyglycosides ayant une longueur de chaîne alkyle en C₁₁ et un mélange de tensioactifs ayant une longueur de chaîne alkyle en C₁₂ à C₁₆.

8. Utilisation selon l'une quelconque des revendications précédentes, pour laquelle ledit premier tensioactif et ledit deuxième tensioactif sont utilisés à des concentrations qui donnent un rapport pseudo-hydro-lipophile, pour ladite première composition tensioactive, compris dans la plage d'au moins 9,8 à 10,8 et un paramètre de solubilisation de ladite composition tensioactive dans ledit pétrole et ladite eau ou ladite saumure d'environ 1,99 à une température d'environ 54°C (130°F), où le rapport pseudo-hydro-lipophile est obtenu par multiplication de la fraction molaire de chaque tensioactif dans la composition tensioactive par son rapport hydro-lipophile (HLB), et sommation des résultats, et où le paramètre de solubilisation se trouve à l'intersection des courbes représentant la solubilisation respectivement pour ledit pétrole (SPₒ) et ladite eau ou ladite saumure (SP_{w}), que l'on détermine en divisant, par le volume de la composition tensioactive dans ladite solution, respectivement le volume dudit pétrole occupé par la microémulsion Winsor de type III et le volume de ladite eau ou de ladite saumure occupé par la microémulsion Winsor de type III.

9. Utilisation selon l'une quelconque des revendications précédentes, pour laquelle le premier tensioactif est choisi dans l'ensemble comprenant les alkylpolyglycosides contenant des groupes alkyle ayant un nombre impair d'atomes de carbone, allant de 9 à 13, et le deuxième tensioactif est choisi dans l'ensemble comprenant les alkylpolyglycosides contenant des groupes alkyle ayant un nombre pair d'atomes de carbone, de 12 à 18.

10. Utilisation selon l'une quelconque des revendications précédentes, pour laquelle le premier tensioactif représente au moins environ 20 % en moles de la concentration totale dudit premier et dudit deuxième tensioactifs.

11. Utilisation selon la revendication 10, pour laquelle le premier tensioactif représente d'environ 20 à environ 90 % en moles de la concentration totale dudit premier et dudit deuxième tensioactifs.

12. Utilisation selon l'une quelconque des revendications 9, 10 ou 11, pour laquelle le deuxième tensioactif est pour l'essentiel constitué d'alkylpolyglycosides contenant des groupes alkyle ayant un nombre pair d'atomes de carbone, allant d'environ 12 à environ 16 atomes de carbone.

13. Utilisation selon l'une quelconque des revendications 1 à 8, pour laquelle le premier tensioactif est un alkylpolyglycoside ayant une longueur de chaîne alkyle de 11 atomes de carbone et le deuxième tensioactif est choisi dans l'ensemble comprenant les alkylpolyglycosides contenant des groupes alkyle ayant un nombre pair d'atomes de carbone, allant de 12 à 18.

14. Utilisation selon l'une quelconque des revendications 9, 10 ou 11, pour laquelle le deuxième tensioactif contient d'environ 50 à environ 75 % en poids d'alkylpolyglycosides contenant des groupes alkyle ayant 12 atomes de carbone.

15. Utilisation selon l'une quelconque des revendications 9 à 13, pour laquelle on utilise une composition tensioactive qui comprend en outre un troisième tensioactif choisi dans l'ensemble comprenant les alcools éthoxylés à chaîne droite contenant d'environ 8 à environ 12 atomes de carbone et contenant d'environ 2 à environ 8 groupes oxyde d'éthylène.

16. Utilisation selon la revendication 15, pour laquelle le troisième tensioactif représente d'environ 10 à environ 50 % en moles de la totalité du premier, du deuxième et du troisième tensioactifs.

17. Utilisation selon l'une quelconque des revendications précédentes, qui comprend en outre le mélange de la composition tensioactive avec de l'eau, de façon que le mélange contienne d'environ 0,1 à 10,0 % en poids des tensioactifs.

18. Utilisation selon la revendication 15, 16 ou 17, pour laquelle le premier, le deuxième et le troisième tensioactifs sont utilisés à des concentrations qui donnent un rapport pseudo-hydro-lipophile, pour ladite première composition tensioactive, compris dans la plage d'au moins 9,8 à 11,4 et un paramètre de solubilisation de ladite composition tensioactive dans ledit pétrole et ladite eau ou ladite saumure d'environ 1,99 à une température d'environ 54°C (130°F), où le rapport pseudo-hydro-lipophile est obtenu par multiplication de la fraction molaire de chaque tensioactif dans la composition tensioactive par son rapport hydro-lipophile (HLB), et sommation des résultats, et où le paramètre de solubilisation se trouve à l'intersection des courbes représentant la solubilisation respectivement pour ledit pétrole (SPₒ) et ladite eau ou ladite saumure (SP_{w}), que l'on détermine en divisant, par le volume de la composition tensioactive dans ladite solution, respectivement le volume dudit pétrole occupé par la microémulsion Winsor de type III et le volume de ladite eau ou de ladite saumure occupé par la microémulsion Winsor de type III.

19. Utilisation selon l'une quelconque des revendications précédentes, pour éliminer les contaminants à base de pétrole se trouvant dans un puits de forage, pour laquelle ledit pétrole est un échantillon des contaminants à base de pétrole devant être éliminés, et comprenant l'injection de ladite solution dans le puits de forage.

20. Utilisation selon la revendication 19, pour solubiliser des matériaux à base de pétrole disposés dans un intervalle de formation de terre, pour laquelle ledit pétrole est un échantillon des matériaux à base de pétrole devant être solubilisés, et comprenant l'injection, dans ledit intervalle de formation de terre, d'une solution acide contenant ladite composition tensioactive à une concentration qui va conduire audit paramètre de solubilisation.

21. Utilisation selon la revendication 1 ou 2, lors d'une opération de cimentation dans un puits, pour laquelle le premier tensioactif comprend un alkylpolyglycoside ayant une longueur de chaîne en C₁₁ à C₁₆, qui comprend l'injection, dans ledit puits, d'une composition de ciment comprenant un matériau de type ciment choisi dans l'ensemble comprenant le ciment Portland, les scories, le carbonate de calcium, l'aluminate de calcium, le sulfate de calcium et l'oxyde de magnésium/calcium, de l'eau et ladite composition tensioactive, la concentration totale du premier tensioactif et du deuxième tensioactif dans ladite eau étant de 0,5 % à 10,0 % en poids, pour dissoudre les matériaux à base de pétrole présentes sur les surfaces de la paroi du puits de forage et de toutes structures disposées dans ledit puits, entrant en contact avec ladite composition de ciment, pour améliorer l'adhérence de ladite composition de ciment auxdites surfaces.
